# EUROPÄISCHE PATENTANMELDUNG

(11) **EP 0 924 542 A1**
(43) Veröffentlichungstag der Anmeldung: **23.06.1999**
(21) Anmeldenummer: 98123576.5
(22) Anmeldetag: 10.12.1998
(51) Int. Cl.: G02B 6/44, H01B 11/22

(54) **Optisches Kabel für die Nachrichtenübertragung**

(30) Priorität: 19.12.1997 DE 29722467 U
(71) Anmelder: BICC KWO Kabel GmbH, 12459 Berlin (DE)
(72) Erfinder: Emmerich, Michael, 12487 Berlin (DE); Brunke, Wolfgang, 12559 Berlin (DE); Müller, Hans Ulrich, 10318 Berlin (DE)

(57) **Zusammenfassung**

Optisches Kabel für die Nachrichtenübertragung mit um ein Zentralelement angeordneten Lichtwellenleiter-Bündeladern, bei dem das Zentralelement zur Nachrichtenübertragung oder Spannungsversorgung und andererseits als zentrales Zug- und Stützelement fungiert.

## Beschreibung

Die Erfindung betrifft ein optisches Kabel für die Nachrichtenübertragung, das in Bündelverseilung aufgebaut und längswasserdicht ist.

Optische Kabel besitzen empfindliche Lichtwellenleiter, gegen Zug, Druck und auch gegen Feuchtigkeit geschützt werden müssen.
In der DE 44 12 374 A1 wird ein Lichtwellenleiter-Kabel mit einer Anzahl von Bündeladern beschrieben, die ein oder mehrere Lichtwellenleiter enthalten. Über den einzelnen Bündeln sind Zugentlastungselemente angeordnet. Desweiteren ist aus der DE 39 35 982 A1 bekannt, um ein Zentralelement die Lichtwellenleiter-Adern anzuordnen und darüber Zugentlastungselemente unter dem Außenmantel vorzusehen.
Nach der DE 39 35 986 A1 besteht das Zentralelement aus Glasrovings, in Masse eingebettetes Aramid mit einer Kunststoffhülle. Dieses Element ist besonders zugfest.
Die DE 35 22 694 A1 stellt ein sogenanntes kombiniertes Kabel zur Signalübertragung vor, das aus elektrischen Adern und Lichtwellenleitern besteht und beide Übertragungselemente sind um einen zugfesten Kern herum verseilt. Über den Adern ist ein Innenmantel, darüber eine zugfeste Hülle sowie ein Mantel angeordnet. Der Kern besteht aus zugfesten Fäden wie Polyaramid, Stahl, Glasgarn, die in Seilform vereint sind.

Aus den bekannten Veröffentlichungen ist zu entnehmen, daß für die Zugentlastung und Stützaufgaben stets ein dafür separates Element entweder im zentralen Bereich oder über der Kabelseele eingebracht werden muß. Dies bedingt einen besonderen und zum Teil aufwendigen Kabelaufbau, wobei auch Durchmesservergrößerungen des Kabels auftreten.

Darüber hinaus ist auch ein koaxiales Nachrichtenkabel bekannt, bei dem zwischen dem Innenleiter und dem Außenleiter Lichtwellenleiter in Bündelform eingefahren sind. Bei dieser Kabelausführung ist die Zugentlastung im Bereich des Außenleiters integriert und die Schutzhülle der Lichtwellenleiter übernimmt eine Stütztfunktion. Dabei besteht die Gefahr von Lichtwellenleiter-Dämpfungen. (DE 42 26 074 A1)

Die Erfindung beseitigt die beschriebenen Nachteile, wobei ein separates Kabelelement für die Zugentlastung und Stützaufgaben eingespart wird.

Erfindungsgemäß wird die Aufgabe dadurch gelöst, daß in einem optischen Kabel mit Bündeladern ein Zentralelement zur Nachrichtenübertragung oder Spannungsversorgung angeordnet ist, das gleichzeitig als zentrales Zug- und Stützelement fungiert. Das Zentralelement besteht aus einem Cu-Vierer, Paaren oder Adern mit oder ohne glasfaserverstärkten Kunststoffelementen. Zur Erhöhung der Steifigkeit wird das Zentralelement mit speziellen Kunststoffen wie z.B. Polycarbonate oder PBTs ummantelt. Zur Gewährleistung der Längswasserdichtigkeit des Zentralelementes kann dieses mit einem thixotropen Gel oder Füllmassen mit niedriger Dielektrizitätskonstante versehen sein.

Die Erfindung wird nachstehend an einem Ausführungsbeispiel erläutert. Das Zentralelement besteht aus einem Kupfer-Vierer 1x4x0,6, gefüllt mit einem thixotropen Gel. Darüber sind 16-faserige Bündeladern der Abmessungen 3,0 mm/2,4 mm angeordnet, die ebenfalls mit thixotropem Gel gefüllt sind. Die Kabelseele besitzt eine Petrolatfüllung oder bei einem trockenem Kabelaufbau können quellfähige Materialien eingesetzt werden. Für die Erhöhung der Zugentlastung sind Glas- oder Aramidrovings vorgesehen.
Über der Kabelseele befinden sich ein gerilltes Stahlband, das beidseitig mit einem Copolymer beschichtet ist und eine chemikalienresistente Schutzhülle.

## Patentansprüche

1. Optisches Kabel für die Nachrichtenübertragung mit um ein Zentralelement angeordneten Lichtwellenleiter-Bündeladern, dadurch gekennzeichnet, daß das Zentralelement zur Nachrichtenübertragung oder Spannungsversorgung und andererseits als zentrales Zug- und Stützelement fungiert.

2. Optisches Kabel nach Anspruch 1, dadurch gekennzeichnet, daß als Zentralelement Cu-Vierer, Paare oder Adern mit oder ohne glasfaserverstärkten Kunststoffelementen eingesetzt sind.

3. Optisches Kabel nach Anspruch 1 und 2, dadurch gekennzeichnet, daß das Zentralelement zur Erhöhung der Steifigkeit mit speziellen Kunststoffen ummantelt ist.

4. Optisches Kabel nach Anspruch 1 bis 3, dadurch gekennzeichnet, daß das Zentralelement mit thixotropem Gel oder Füllmassen mit niedriger Dielektrizitätskonstante gefüllt ist.
